(19) Europäisches Patentamt / European Patent Office / Office européen des brevets

(11) **EP 3 677 920 B1**

(12) **EUROPEAN PATENT SPECIFICATION**

(45) Date of publication and mention of the grant of the patent:
**21.02.2024 Bulletin 2024/08**

(21) Application number: **19219759.8**

(22) Date of filing: **27.12.2019**

(51) International Patent Classification (IPC):
**G01N 35/10** $^{(2006.01)}$   **B01L 3/02** $^{(2006.01)}$
**B41J 2/00** $^{(2006.01)}$   **H05K 3/12** $^{(2006.01)}$

(52) Cooperative Patent Classification (CPC):
**G01N 35/10; B01L 3/0268;** B01L 2200/0605; B01L 2300/0829; G01N 2035/1041

(54) **VOLUME DATA REPRESENTATION AND PROCESSING FOR LIQUID DISPENSING DEVICES**

VOLUMENDATENREPRÄSENTATION UND -VERARBEITUNG FÜR FLÜSSIGKEITSABGABEVORRICHTUNGEN

REPRÉSENTATION ET TRAITEMENT DE DONNÉES DE VOLUME POUR DISPOSITIFS DE DISTRIBUTION DE LIQUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.01.2019 US 201962788290 P**
**30.05.2019 US 201916426137**
**30.10.2019 US 201916668239**

(43) Date of publication of application:
**08.07.2020 Bulletin 2020/28**

(73) Proprietor: **Funai Electric Co., Ltd.**
**Daito,**
**Osaka, 574-0013 (JP)**

(72) Inventors:
• **DEBOARD, Bruce A.**
**Lexington, KY Kentucky 40508 (US)**
• **JONES, Brian T.**
**Lexington, KY Kentucky 40508 (US)**
• **MARRA III, Michael A.**
**Lexington, KY Kentucky 40508 (US)**

(74) Representative: **Becker Kurig & Partner**
**Patentanwälte mbB**
**Bavariastraße 7**
**80336 München (DE)**

(56) References cited:
**EP-A1- 1 093 923    EP-A1- 1 324 829**
**EP-A1- 1 658 894    EP-A2- 2 231 734**
**US-A1- 2018 222 109**

• **ANONYMOUS: "HP D300 Digital Dispenser Operating Manual", OPERATING MANUAL, HEWLETT-PACKARD COMPANY, OREGON, vol. Edition C, 29 February 2012 (2012-02-29), pages 1-74, XP009514186, [retrieved on 2019-07-01]**

**Description**

**RELATED APPLICATION**

This application claims priority to provisional application Serial No. 62/788,290, filed January 4, 2019, now pending and is related to U.S. application Serial No. 16/426,137, filed May 30, 2019, now pending.

**TECHNICAL FIELD**

The disclosure is directed to devices and methods that are used to accurately dispense one or more fluids onto or into precise areas of a substrate for performing analysis of samples confined to the precise areas of the substrate or for building up layers of material in predetermined areas on the substrate.

**BACKGROUND AND SUMMARY**

A device such as an inkjet device, can dispense very small droplets of ink, usually measured in picoliters onto a substrate. For inkjet printing applications, the volume of ink that is deposited is a relatively low amount, and the volume is not as important as other factors such as color matching and print quality. The number of droplets is not specified or controlled by the user and thus the user has no ability to specify the dispensing of more ink droplets or fewer ink droplets than required for a specific printing application. A typical inkjet printer is limited to the deposition of about 2 to about 3 $\mu$L/cm$^2$.

However, for other applications that require accurate amounts of liquid to be dispensed onto or into a medium, fluid volume may be an extremely important and/or critical factor. For some application, it may be advantageous to specify that a volume of fluid is deposited into or over a specific area. An example may be the dispensing of a single drop of fluid containing a single cell into a well of a well-plate. Another example may be dispensing a large number of fluid droplets into a small areas such as filling each of 384 wells in a well-plate. Accordingly, the density of fluid deposited into the wells of a well-plate may require the dispensing of more than 250 $\mu$L/cm$^2$ of fluid. Likewise, depositing fluid onto a glass slide for analyzing a sample on the glass slide requires that a closely controlled amount of fluid is deposited over a specific area of the glass slide.

In the medical field, in particular, there is a need for automated sample preparation and analysis. The analysis may be colorimetric analysis or require the staining of samples to better observe the samples under a microscope. Such analysis may include drug sample analysis, blood sample analysis and the like. In the analysis of blood, for example, blood is analyzed to provide a number of different factors that are used to determine the health of an individual. When there are a large number of patients that require blood sample analysis, the procedures may be extremely time consuming. Also, there is a need for accurate preparation of the samples so that the results can be relied on. There are many other situations that require sample analysis in the medical field and in other fields that can benefit from the use of analytical instruments that provide accurate and reproduceable results, such as micro-titration of multiple samples.

Well plates, slides and other substrates are used for many experiments and laboratory procedures. The process of filling the wells or spotting is often performed manually or using expensive lab equipment. In some cases, the wells are filled with hand operated pipettes. In other cased, high-end automated devices based on pipette technology are used to fill the well plates. Such automated devices accommodate an open well dispense head only. The open well dispense head is a dispense head where a small amount of fluid must be deposited into an opening in the dispense head before use. The fluid is typically deposited manually using a pipette or similar means. The dispense head is held stationary while moving the microplate in both X and Y directions. These high end devices are extremely expensive.

In the areas of micro-circuit manufacture, fluids are required to be dispensed in precise locations to provide circuit devices on a substrate. The volume of fluid dispensed per unit area is typically much greater than can be provided by conventional ink jet printing technology. In some cases, different fluids are combined together on the substrate to provide a chemical or physical change to the fluids so that the resulting material performs a desired circuit function.

Other areas of micro-manufacturing may also require the precise deposit of fluids into or onto a substrate. There is thus the need for a method and device that can be used to program, dispense and visualize the deposition of a predetermine volume of one or more fluids per unit area of a substrate.

EP 1093923 A1 discloses a recording system for printing a high resolution image. Low resolution print data is transferred from the host computer to the printer and expanded into high resolution print data in the printer, such as by using a predetermined pixel pattern or a pattern key. The pixel pattern is changed in each of the plurality of printing scans, such as by changing the scanning frequency, to eject additional ink droplets per pixel. An image process, such as an output correction process, is performed by the host computer to determine the pixel pattern and pattern key information for printing a high resolution image.

The present invention is defined in the appended claims. The following disclosure serves a better understanding of the present invention.

The system and method described herein may be used to visualize the deposition of one or more fluids into or onto a substrate so that a precise amount of the one or more fluids is dispense in a predetermined area of the substrate. Thus, the system and method may be used for performing analysis of samples and for micro-manufacturing of electrical and other devices.

The system and method provides a means to accurately dispense a specified volume of fluid over a specified area, including a method of representing volume data in an image-like format that is scalable to any number of data channels representing potentially different fluids. In addition, the method is scalable to any number of layers of data, with each layer separated by a separator. The data may be processed in a way to allow a printer or potentially other liquid dispensing devices to accurately dispense fluids onto or into a medium.

## BRIEF DESCRIPTION OF THE DRAWINGS

FIG. 1 is a flow diagram for processing data to be used by a digital dispense device.
FIG. 2 is a perspective view of a digital dispense device and user interface therefor.
FIG. 3, is a cut-away, perspective view of the digital dispense device of FIG. 2.
FIGs. 4-5 are graphical representations of fluid droplets disposed in a pixel location.
FIG. 6 is a perspective view of a micro well plate on a tray for accepting fluids from the digital dispense device of FIG. 2.
FIG. 7 is a flowchart for creating FVF data for the digital dispense device of FIG. 2.
FIG. 8 is a simplified flow diagram for dispensing layers of fluid onto a substrate using the digital dispense device of FIG. 2.
FIG. 9 is a graphical representation of fluid layers deposited on a substrate by the digital dispense device of FIG. 2 for fluids 1 to N.
FIG. 10 is a process flow diagram for dispensing fluids onto a substrate according to a software program for processing data for the digital dispense device of FIG. 2.
FIGs. 11-14 are graphical representations of how total volumes are divided for fluid deposition according to various digital dispense device resolutions.
FIGs. 15-17 are graphical representations on a digital display for fluids deposited on or in particular areas of a substrate.

## DETAILED DESCRIPTION OF EMBODIMENTS OF THE DISCLOSURE

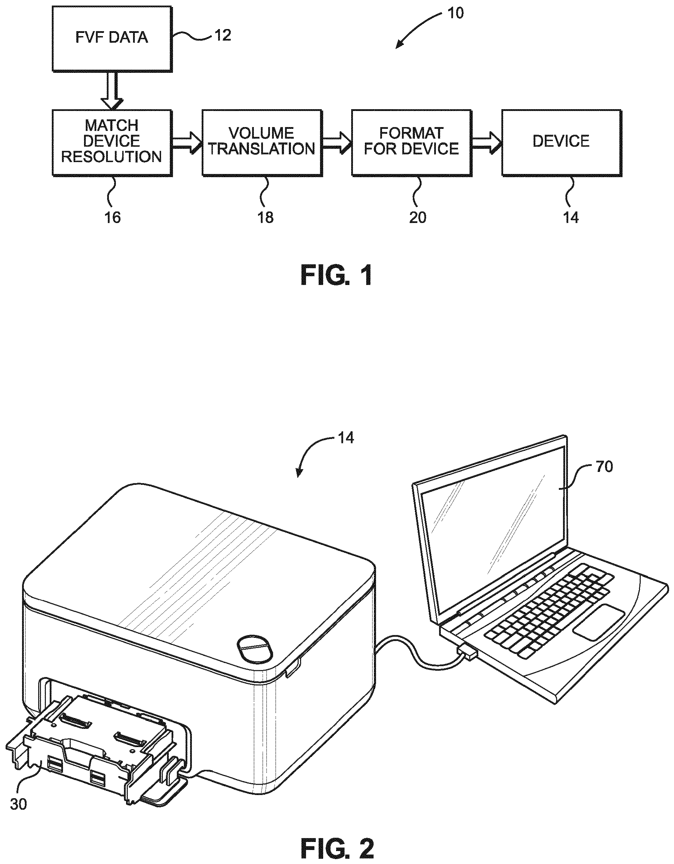

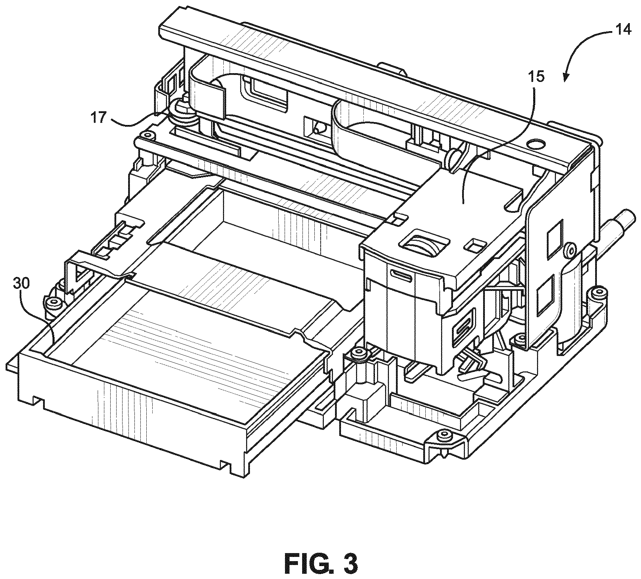

In contrast to convention inkjet printing devices, the disclosed embodiments provide a unique data format appropriate for defining the volume/area required for controlling the dispensing of predetermined amounts of fluid. The data format described here is referred to as "FVF format" and includes "FVF data." The data for the FVF format is processed in a way specific to a fluid dispensing device to accurately dispense a specified volume of fluid into the specified area. FIG. 1 shows an overall process flow 10 for the FVF format. In order to encode the FVF data 12 for use by a digital dispense device 14 (FIGs. 2-3), a data format that is similar to existing image formats such as a raster may be used. A cut-away view of the digital dispense device 14 is illustrated in FIG. 3 and includes a removable cartridge 15, and a translation device 17 for moving the cartridge in an x direction across a tray 30. The cartridge 15 may include a single fluid or multiple fluids and an ejection head for depositing fluids on a substrate. The cartridge 15 may be removed and a new or different cartridge installed in the digital dispense device 14 for deposition of one or more different fluids onto a substrate.

Traditional image formats specify the color desired at a specific x,y location on a substrate. Accordingly, the tray 30 may move the substrate in a y direction while the cartridge traverses the substrate in an x direction. The traditional image formats are also often interleaved, which limits the number of channels that can be described. By contrast the FVF format describes each channel as a separate plane and supports any number of planes. Accordingly, any number of fluid channels may be described in one data set so it is easiest to describe each channel's data separately rather than interleaving the channel data.

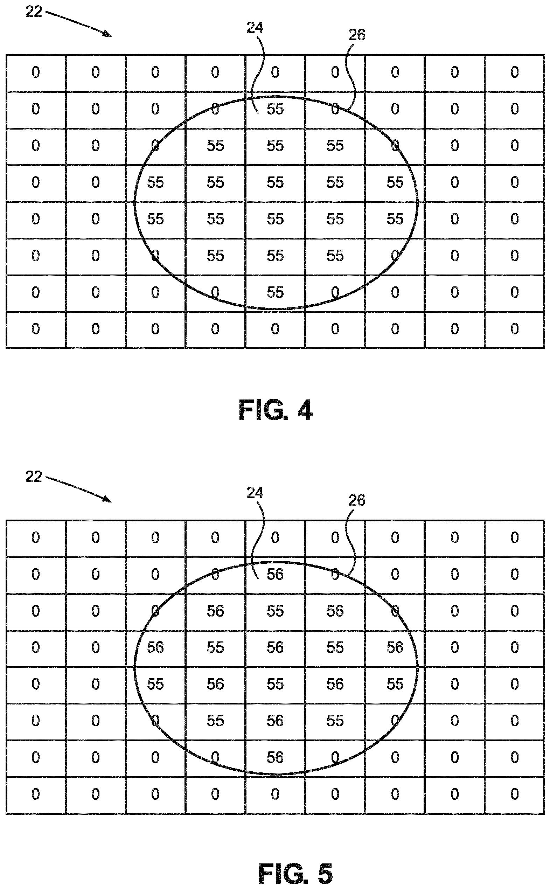

As a simple illustration, the FVF data defines an array 22 of pixels 24, for example as shown in FIG. 4, where the numbers in the array 22 of pixels 24 indicates the number of drops that are dispensed to a specific pixel location 26. A value of 0 signifies 0 drops, 1 signifies 1 drop, 2 signifies 2 drops, and so on. The FVF format also enables defining many channels or fluids independently without a limitation on the number of planes defined, as well as allowing for a means to specify layers of dispensed fluid combinations.

As shown in the array 22, a pixel location 26 is specified that contains 18 pixels 24. Assuming that a desired total volume of the pixel location 26 is 10,000 pL and the device 14 ejects a drop size of 10 pL, the number of drops per pixel 24 can be calculated as follows: 10,000 pL/(10 pL/drop)/18pixels = 55.56 drops/pixel, as shown in FIG. 4.

The foregoing example results in a total error of 0.56 drops per pixel, or a total of 10.08 drops. The remainder of drops may be spread easily over the target pixel location 26 of 18 pixels using a variety of techniques. One such result is shown FIG. 5, where 1 drop is added to the amount in 10 pixels 24. Accordingly, the FVF data format for pixel location 26 has an accuracy of within less than 1 drop size of the digital dispense device 14.

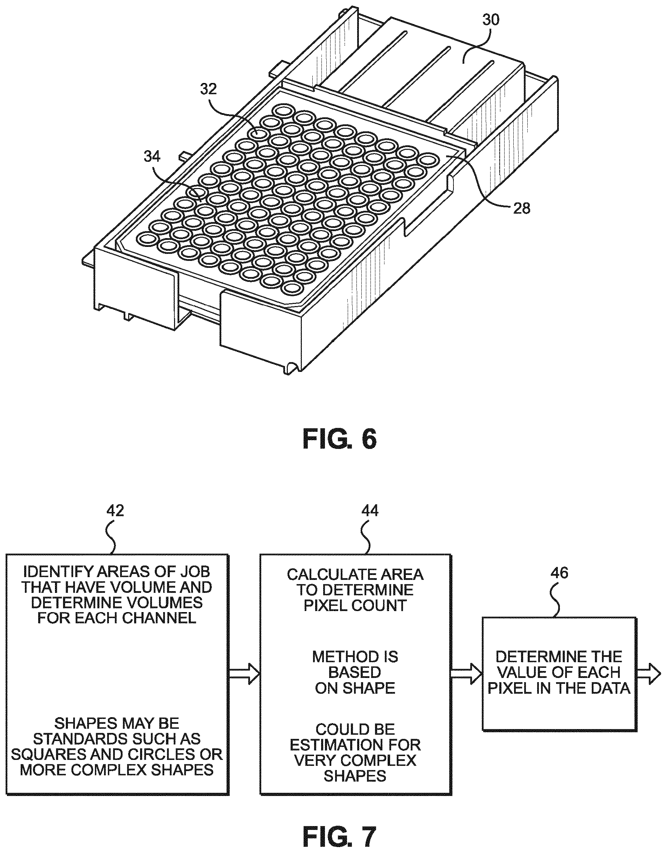

As a second, more specific illustration, consider volumes and resolutions common to micro-well plate dispensing of fluids. A conventional micro-well plate 28 disposed in a tray 30 for the digital dispense device is illustrated in FIG. 6. The fluid volume required for micro-well plate fluid dispensing applications is typically many times the volume required for inkjet printing applications. For example, a 96 well micro-well plate has accurately sized wells 32 that are usually circular. If it is desired to dispense into the well 32 of a micro-well plate 28 using a circular area with a diameter of 4 mm, then the total area of the well 32 is 12.57 mm$^2$. In order to convert the well plate area to pixels, a resolution for the pixel data must be determined. A typical inkjet resolution is 300 dpi (dots per inch). Using 300 dpi as the device resolution, we get 1 mm = 11.81 300ths. Based on the 300 dpi resolution, the area calculation for a 4 mm diameter well 32 is as follows:

$$\text{Radius} = 2\text{mm} = 11.81*2 = 23.62 \text{ 300ths.}$$

$$\text{Area} = 3.1415*(23.62)^2 = 1752.65 \text{ pixels at 300 dpi}$$

There is no such thing as a fractional pixel, so the result is rounded down 1752 pixels.

Next the pixel values of those 1752 pixels is determined. For this example the following assumption is made:

$$\text{Desired Volume} = 1 \text{ uL} = 1,000,000 \text{ pL}$$

$$\text{Drop volume} = 10 \text{ pL}$$

In general, "Desired Volume" is a parameter of the application, and "Drop Volume" is a property of a fluid ejection cartridge used to dispense the fluid.

In order to place 1 uL in a 4 mm diameter well 32 using 10 pL drops, the following calculation is made: 1,000,000/10 = 100,000 drops.

Assuming a uniform coverage over the selected area is desired, the 100,000 drops is spread over the pixel area as follows: 100,000/1752 pixels = 57.08 drops per pixel, rounded down to 57 drops per pixel. So each pixel in the 1752 pixel area would have a value of 57 drops per pixel. The foregoing assumes that an error -0.08 drops per pixel is acceptable, however, there are ways to offset the error.

In order to place circular areas in the correct locations on the well plate 28, pixel values of 0 are used to signify empty space 34 between wells 32. Using this method, a raster format is constructed that can specify droplet volumes and locations.

If it is desired to reduce the error associated with 57.08 drops per pixel being rounded down to 57 drops per pixel, a slightly more complex algorithm to generate the FVF data can be used. In order to appreciate the use of the more complex algorithm, the error is first calculated for truncating 57.08 drops per pixel to 57 drops per pixel as follows:

$$57.08 \text{ drops per pixel} * 1752 \text{ pixels} = 100004.16 \text{ drops}$$

$$57 \text{ drops per pixel} * 1752 \text{ pixels} = 99864 \text{ drops}$$

The difference is 140 drops, which is not a large number. However, in some applications 140 drops can important, and in other examples the error could be 0.49 rather than 0.08, which would result in a much larger error.

Instead of setting every one of the 1752 pixels to 57 drops per pixel, a method that accumulates the rounding error may be used to give a more accurate dispense volume. According to the method, the drops per pixel are truncated rather than rounded, so that 57.08 drops per pixel becomes 57 drops per pixel, and 57.99 drops per pixel also becomes 57 drops per pixel. Each pixel is calculated as follows:

$$Real\ Pixel\ Value = Real\ Pixel\ Value + Accumulated\ Error$$

$$PixelValue = truncate\ (\ Real\ Pixel\ Value\ )$$

$$Accumulated\ Error = (\ Real\ Pixel\ Value - PixelValue)$$

In this way, the error is accumulated and eventually enough will be accumulated so that the truncated value will become 58 instead of 57, according to the above example. The foregoing method may be able to reduce the error to within one drop volume.

FVF data in the examples above has been described as one byte per pixel, but the FVF data does not have to be limited to one byte per pixel. The FVF format itself allows that any number of bytes may be used to describe a pixel, although in practice a maximum value of four bytes per pixel would likely be the largest value that is used.

Each set of FVF data comprises a header and associated data, with the header describing various aspects of the data, including, but not limited to:

1. Data width
2. Data height
3. Bytes per pixel
4. Number of data channels
5. Horizontal pixel resolution
6. Vertical pixel resolution
7. Original Base Volume
8. Maximum Value
9. Volume Multiplier
10. MaxFrequency

wherein, the "Original Base Volume" is defined as the value in pL that was used to create the file which is usually the drop volume. The Original Base Volume is used to translate between differing drop volumes. The "Maximum Value" is defined as the maximum pixel value found in the pixel data. The "Volume Multiplier" is defined as the value that is applied to each pixel as a multiplier, which can be used to represent higher volumes in lower byte per pixel data, potentially at the expense of some dispense volume accuracy. The "MaxFrequency" is defined as the value that specifies the maximum frequency that the data can be dispensed at which may affect the top speed of the digital dispense device 14.

In addition to the above aspects of the FVF data in the header, there may be application specific values included in the header data that only certain applications will use and other applications will ignore. For example, many inkjet printers use a level of dithering, sometimes called shingling, to effectively spread the data in order to prevent certain fluid ejection defects that may occur. A header value for SHINGLELEVEL may communicate to digital dispense device 14 information on how to dispense the data while a different device may ignore such header value for SHINGLELEVEL.

FIG. 7 is a flowchart 40 for creating FVF data. In the first step 42 of the process , areas of a "Job" that have volumes are identified and the volume per area for each channel are determined. The shapes for the volumes may include standard shapes such as squares, circles, triangles, ovals, and the like, or more complex shapes. A user can draw the shapes with a graphics program and thus can specify any desired shape and the volume per pixel that is dispensed in the specified area. Thus, an area may have different shapes and different volumes per pixel.

In the next step 44 of the process, the area is calculated in order to determine the pixel count for the specified area. The method that is used for determining the pixel count is dependent on the shape of the area. For very complex shapes, the calculation method may be an estimation of the pixel count rather than an actual pixel count. Finally, in step 46, the value for each pixel in the FVF data is determined. The foregoing process is repeated for each fluid or channel required by the particular fluid dispense application.

The foregoing FVF data description may be considered as the dispensing of fluid in a single layer if the concept is extended to a three dimensional fluid dispense application, even if the third dimension is time instead of a Z-axis. The concept of a fluid layer may be useful for many different applications. Each fluid layer may be separated by a layer separator from an adjacent layer for a variety of reasons, and the parameters of each fluid layer may be different for different applications.

In some applications, the layer separator may be a period of time that is needed to dry the dispensed fluid, time to mix dispensed fluids properly, or time to complete a chemical reaction. In other applications, the layer separator may be a prompt for change to a second fluid cartridge when a second fluid is required to be dispensed after a first fluid from a first cartridge. In some applications, each cartridge may dispense 2 or more fluids, such as four fluids.

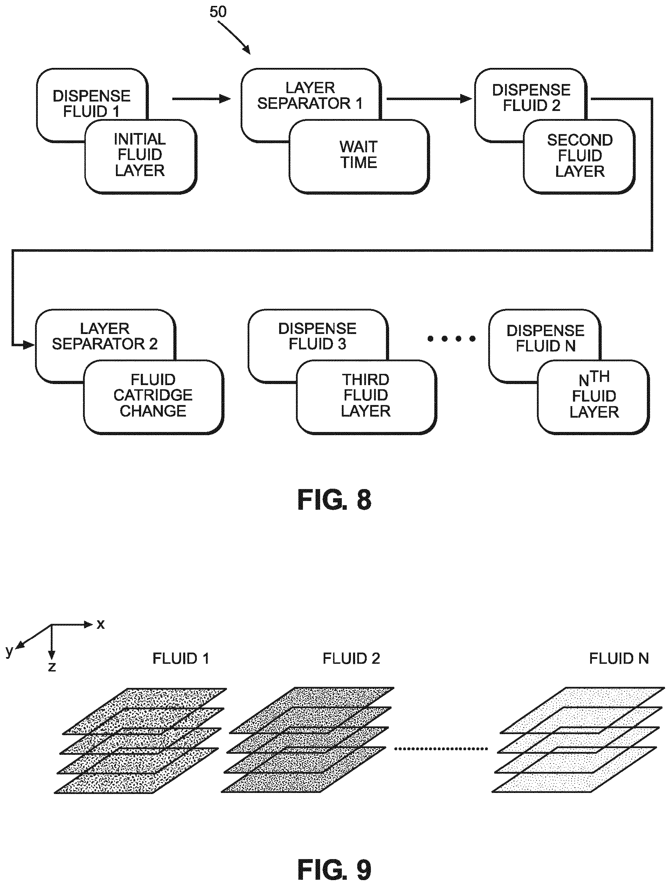

In other applications, the layer separator may be an external signal supplied by an external device that measures some property of the layer such as temperature, hardness, pH, density, or other physical property change that may occur before the next fluid layer is dispensed. The layer separator may be an external device that manipulates the substrate or layer in some way, either by moving it or by supplying another step of the fluid dispense job such as putting a lattice in place, providing heat or light to dry or cure the fluid, or other operations that do not include dispensing additional fluids. In still other applications, the layer separator may be a wait period of time between fluid layer dispensing. There is no particular limit to the number of layers and layer separators that may be used according to the disclosure. FIG. 8 illustrates a simplified flow diagram 50 of dispensing layers of fluids with layer separators between fluid dispense steps. The fluid layers that are dispense in a particular area are illustrated schematically in FIG. 9 for fluids 1 to N dispensed by a digital dispense device 14.

As set forth above, the method according to the disclosure formats FVF data for a digital dispense 14 where the input is a volume of fluid to be deliver over a defined area. The input data that is created by the foregoing calculations is effectively an image representing both X and Y axes, but also introduces a Z axis that represents volume as shown schematically in FIG. 9. In addition, when dispensing more than 1 channel or fluid at once, a 4th dimension is introduced to track the different channels or fluids.

The foregoing method provides benefits over traditional digital dispense systems which may print the entire volume of fluid into a micro-plate well in a single operation. The foregoing method may be used to spread the volume of fluid to be dispensed over multiple dispense head passes and multiple fluid ejectors along a dispense head array of an ejection head. This will minimize the impact of missing or poorly performing fluid ejectors. Depending on the desired dispense accuracy and probability of ejectors not functioning correctly, a minimum number of fluid ejectors to use can be specified or calculated.

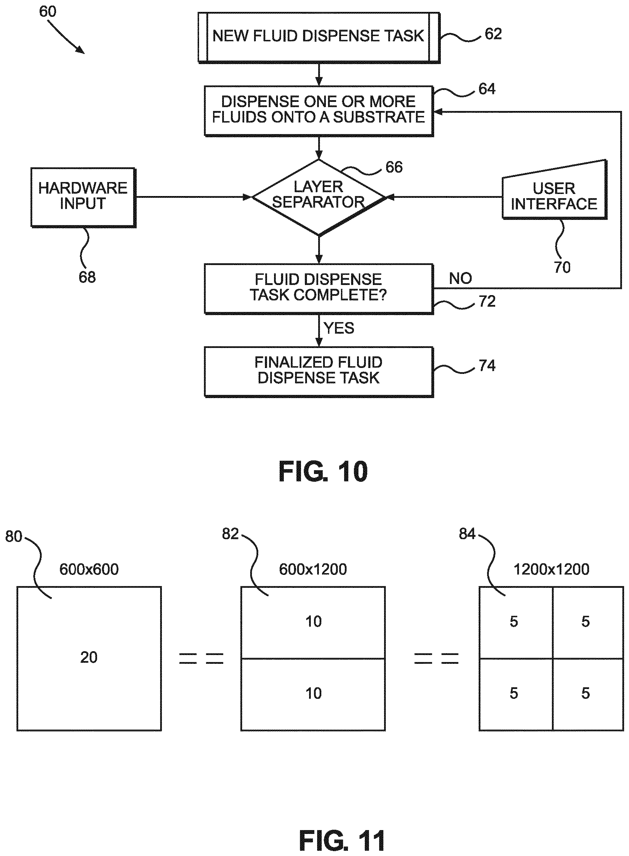

FIG. 10 illustrates a process flow diagram 60 implemented by a software program that resides in the memory of a computer or in a memory of the digital dispense device 14 for sequencing the dispensing of multiple fluids by the digital dispense device 14 in order to complete a specific fluid dispensing task. According to the process flow diagram 60, a fluid dispense task is identified in the software in step 62. Once identified, one or more fluids may be dispensed simultaneously or sequentially onto a substrate in step 64. If a reaction is required to take place, a layer separator 66 provides a built in wait time, a hardware input 68, such as a color change, temperature change, density change, or other fluid property input, and/or a user input from a user interface 70 that can vary widely depending on the fluids being used and the particular fluid dispense task being performed. The user inputs may be selected from a fluid cartridge change, a fluid selection change, a fluid volume change, visual inspection, or other user input as required by the fluid dispense task. In step 72, a decision is then made by the software program to continue to dispense fluids to complete the fluid dispense task, or to finalize the fluid dispense task in step 74.

Accordingly, the dispense system procedure described in FIG. 10 may be used to create automated jobs, and/or the analysis steps that require human input can be scripted and displayed by the system to reduce errors in the fluid dispense task procedures.

The FVF data is generic and for the most part not specific for a digital dispense device 14. However, at an application level, the unique characteristics of the digital dispense device 14 may come into play. It is likely that a specific device or application will have a very narrow range of fluid dispense jobs that it can perform. For example, the digital dispense device may only print on or dispense fluids into micro-well plates or onto slides. Also, the digital dispense device may perform the fluid deposition tasks in a very specific way, such as by use of a pipette machine dispensing fluid into wells one at a time. Accordingly, the processing of the FVF data may vary from device to device.

Referring again to FIG. 1, the first step 16 processes the FVF data to match the output resolution of the digital device 14. Matching the FVF data includes an upsample or downsample in resolution, as well as a scale factor using an original base volume. For example, if the FVF data is 600x600 dpi, but the digital dispense device output is 1200x1200 dpi, then a resolution change of the FVF data is necessary. A resolution of 1200×1200 dpi means that there are twice as many pixels horizontally as the input FVF data, and twice as many pixels in the Y or vertical plane as the input FVF data. One 600x600 dpi pixel can contain four 1200x1200 dpi pixels in the same area. If the total volume of fluid in a layer is to be held constant, the volume of fluid will have to be divided to spread the 600x600 dpi pixel over the four 1200x1200 dpi pixels.

FIGs. 11-14 illustrate how the total volume may be divided for different device output resolutions. For example, with reference to FIG. 11, if the FVF data requires the deposition of 20 drops of fluid in the 600x600 dpi pixels (pixel area 80) and the device output resolution in pixel area 82 is 600×1200, then the 20 drops are divided into so that 10 drops are dispensed in each of the 600x1200 dpi pixels in pixel area 82 and 5 drops are dispensed in each of the 1200x1200 dip pixels in pixel area 84 in order to obtain an equal volume of fluid in the specified pixel area.

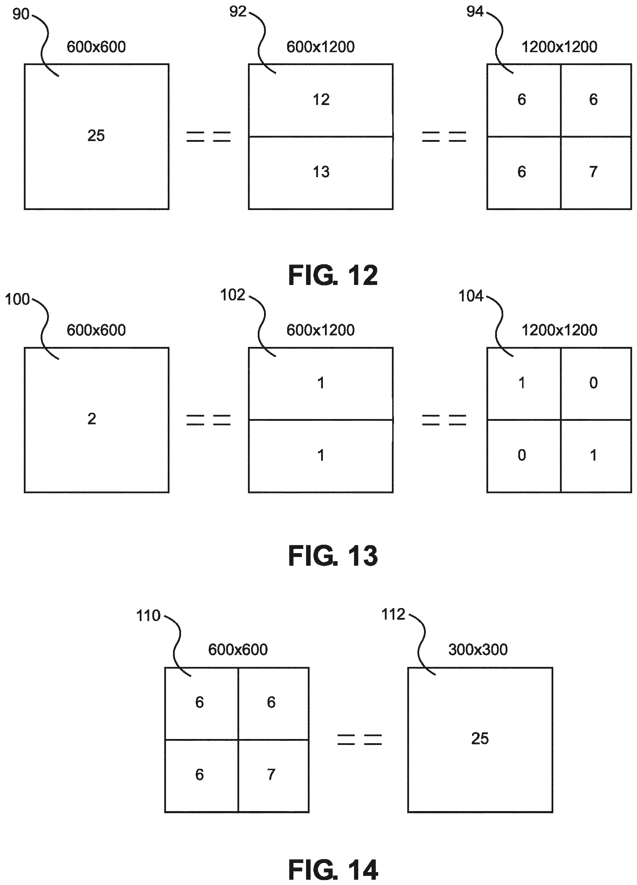

FIG. 12 illustrates an example wherein there is an odd number of fluid droplets to dispense. For example, if the FVF data requires 25 drops with a resolution of 600x600 dpi in pixel area 90, then the 600×1200 dpi pixels of pixel area 92 require 12 drops in one portion of the pixel area 92 and 13 drops in another portion of the pixel area 92 to provide the 25 drops. Likewise, the 1200×1200 dpi pixels of pixel area 94 require 6 drops in three portions of the pixel area 94 and 7 drops in one portion of the pixel area 94 in order to obtain the 25 drops.

In another example shown in FIG. 13, the FVF data requires 2 drops in the pixel area 100 with a resolution of 600x600 dpi, then the 600×1200 dpi pixels requires 1 drop in each portion of the pixel area 102. However, the pixel area 104 of the 1200×1200 dpi pixels has 1 drop in two portions of the pixel area 104 and 0 drops in two other portions of the pixel area 104.

FIG. 14 illustrates a situation wherein the FVF data is at a higher resolution than the digital dispense device. In that case, the FVF data will have to be downsampled. Accordingly, if the device resolution has a 300x300 dpi output, the 600x600 dpi pixels in pixel area 110 will have to be combined into one 300x300 dpi pixel area 112 which results in a sum of the four pixels in pixel area 100 as shown.

Referring again to FIG. 1, the next step 18 of the process is to translate the volume data. Based on the original base volume from the header information, it may be necessary to translate the pixel values into droplet size for the fluid cartridges if the device droplet size does not match the original base volume. Such a situation may occur if the FVF data was generated for a different device or cartridge, or it could be the same device, and the fluid properties in the cartridge do not match the original data. Some fluids may have different drop volumes within the same cartridge. Step 18 may be done before step 16 or concurrently with step 16 in the process.

The final step 20 is to take the modified FVF data and format the FVF data into a data stream that the digital dispense device 14 recognizes. Step 20 may be done in the device 14 itself or in a host application that feeds the formatted data to the device 14. The format generated in step 20 is typical of print data for the device 14.

Some of the benefits of the disclosed embodiments, include but are not limited to:

1) an ability to precisely specify an amount of fluid to be dispensed to a particular area;
2) an ability to extend fluid deposition to any number of channels;
3) an ability to scale of the volume of fluid to handle large volumes using a base volume and volume multiplier;
4) an ability to specify a number of bytes per pixel;
5) the use of layers and layer separators between fluid dispense steps to allow for a variety of actions or wait times during a dispense process; and
6) an ability to translate data into a form that can be used by a wide variety of liquid dispensing devices to accurately dispense fluid onto or into a medium.

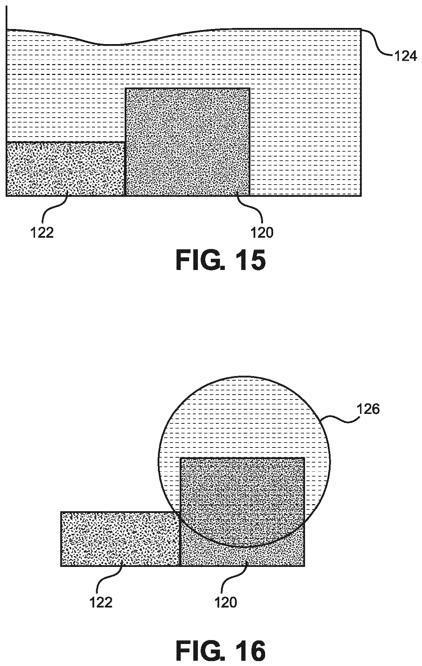

In order to visualize the fluids dispensed by the digital dispense system, the fluid volume per area information may be displayed on the user interface 70 as a graphic image as shown in FIGs. 15-17 representing both X and Y axes that represent an area and a Z axis that represents volume for fluids 1 to N. In addition, when dispensing more than 1 channel or fluid at once, a 4th dimension is introduced to track the different channels or fluids.

When dispensing fluids in applications where volume is an important input, such as medical micro-well plates 28, glass slides, or other substrates, it's important to be able to display to the user a useful visual representation of the volume of each fluid being used. Since some wells 32 can hold a significant volume, a relative volume display that uses the fluid with the highest volume as a maximum and scales the rest of the fluids to the highest volume fluid is one way to compare the fluids to each other. An absolute volume scale may not be useful for fluids in a large well since the amount of fluid may not be sufficient to provide visually useful information.

In FIG. 1, bar graphs 120 and 122 for two fluids represent a relative volumes of each fluid in a single well 32 of a well plate 28, on a glass slide, or on another substrate, while 124 represents the absolute total volume of the fluids dispensed. In FIG. 16, bar graphs 120 and 122 of two fluids again represent the relative volumes of each fluid on a slide or in a single well 32 of a well plate 28, however, an expanding circle 126 may be used to represent the total relative volume of all fluids that are dispensed into a well 32, onto a glass slide, or onto other substrates. The user interface for display on a digital display device of a user interface 70 may be configured to provide both types of visual representation shown in FIGS. 15 and 16 by selecting a desired visual representation from a drop down menu in the user interface 70. Likewise, the user interface 70 may be configured to show the absolute or relative volumes in a single well 32 or in multiple wells 32 of a well plate 28.

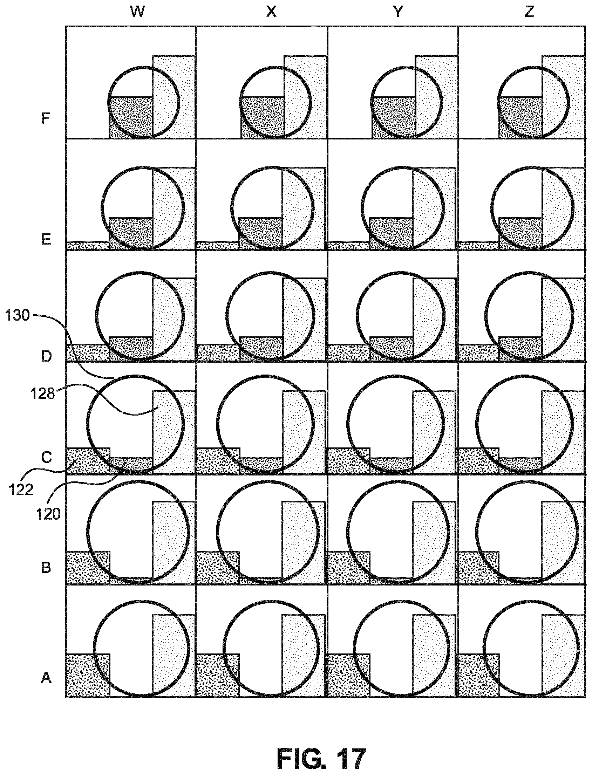

FIG. 17 illustrates a visual representation of the fluids in wells 32 of a well plate 28 using bar graphs 120, 122 and 128 and relative volume circles 130. The bar graph 128, representing the largest volume of fluid, is used to scale the other fluids in order to provide a good comparison of fluid volumes in each well. Only a small portion of the well plate 28 is represented by the visual display in FIG. 17 providing a visual display of the fluid in the wells in rows A-E and in columns W-Z. The amount of each fluid dispensed may vary by row, by column, or by individual cell. The digital dispense device 14 may be programmed by use of the digital display device to deposit predetermined amounts of fluids in predetermined locations of a well plate 28, glass slide or other substrate.

It is noted that, as used in this specification and the appended claims, the singular forms "a," "an," and "the," include plural referents unless expressly and unequivocally limited to one referent. As used herein, the term "include" and its grammatical variants are intended to be non-limiting, such that recitation of items in a list is not to the exclusion of other like items that can be substituted or added to the listed items

For the purposes of this specification and appended claims, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that can vary depending upon the desired properties sought to be obtained by the present disclosure. At the very least, each numerical parameter should at least be construed in light of the number of reported significant digits and by applying ordinary rounding techniques.

**Claims**

1. A method for ejecting a volume per unit area for each of one or more fluids from a digital dispense device (14) comprising a cartridge (15) that is moveable by a translation device (17) across a tray (30), wherein the cartridge (15) comprises an ejection head for depositing the one or more fluids into or onto a substrate held by the tray (30), wherein the dispense head comprises multiple fluid ejectors along a dispense head array for dispensing fluid droplets, the method comprising the steps of

   a) inputting to a memory, based on a volume per unit area for each of the one or more fluids to be ejected from the digital dispense device (14), a data for each of the one or more fluids, wherein the data comprises a header information and defines an array of pixels on a specified area of the substrate, and a number of droplets for each pixel for each of the one or more fluids, wherein the header information comprises a droplet volume and further comprises a horizontal pixel resolution and a vertical pixel resolution that represent a resolution of the data; and wherein the resolution of the data is not specific for the digital dispense device (14);
   b) processing the data to match the resolution of the data and a spatial resolution of the digital dispense device (14) by upsampling or downsampling the resolution of the data to calculate a number of droplets to be ejected for each of the one or more fluids to each pixel in accordance with the spatial resolution of the digital dispense device (14);
   c) specifying a minimum number of fluid ejectors among the multiple fluid ejectors for the number of droplets to be ejected to each pixel; and
   d) ejecting fluid from the digital dispense device (14) to provide the volume per area for each of the one or more fluids,

   the method being **characterized in that** the step a) comprises calculating the number of droplets for each pixel for each of the one or more fluids by:

   a1) calculating an area of the specified area;
   a2) determining a number of pixels of the specified area based on the calculated area and the resolution of the data;
   a3) calculating the number of droplets for each pixel of the specified area for each of the one or more fluids based on the number of pixels of the specified area, the droplet volume and the volume per unit area for each of the one or more fluids.

2. The method of claim 1, wherein the resolution of the data is greater than the spatial resolution of the digital dispense device (14).

3. The method of claim 1, wherein the resolution of the data is less than or equal to the spatial resolution of the digital dispense device (14).

4. The method of claim 1, further comprising (e) inputting a separator which comprises a wait period of time between fluid depositions after step (d) and repeating steps (a) - (d).

5. The method of claim 4, further comprising (e) inputting a separator which comprises a time period for a fluid cartridge change between fluid depositions after step (d) and repeating steps (a) - (d).

6. The method of claim 1, further comprising (e) inputting a separator which comprises a time period to dry the dispensed fluids, mix dispensed fluids, or complete a chemical reaction of the dispensed fluids between fluid depositions after step (d) and repeating steps (a) - (d).

7. The method of claim 4, further comprising repeating step (e) for each of the one or more fluids up to and including forty different fluids.

8. A fluid dispense system comprising:

a digital dispense device (14) for ejecting a volume per unit area for each of one or more first fluids, the digital dispense device (14) comprising a cartridge (15) that is moveable by a translation device (17) across a tray (30), wherein the cartridge (15) comprises an ejection head for depositing the one or more first fluids into or onto a substrate held by the tray (30), wherein the dispense head comprises multiple fluid ejectors along a dispense head array for dispensing fluid droplets;
a computer comprising a processor, a memory, and an input configured for inputting to the memory, based on the volume per unit area for each of the one or more first fluids to be ejected from the digital dispense device (14), a data for each of the one or more first fluids, wherein the data comprises a header information and defines an array of pixels on a specified area of the substrate, and a number of droplets for each pixel for each of the one or more first fluids, wherein the header information comprises a droplet volume and further comprises a horizontal pixel resolution and a vertical pixel resolution that represent a resolution of the data, and wherein the resolution of the data is not specific for the digital dispense device (14), and
wherein the processor is configured for processing the data to match the resolution of the data and a spatial resolution of the digital dispense device (14) by upsampling or downsampling the resolution of the data to calculate a number of droplets to be ejected for each of the one or more first fluids to each pixel in accordance with the spatial resolution of the digital dispense device (14), and
wherein the processor is further configured for specifying a minimum number of fluid ejectors among the multiple fluid ejectors for the number of droplets to be ejected to each pixel; and
a first fluid cartridge (15) containing fluid ejectors for ejecting one or more first fluids from the digital dispense device (14) to provide the volume per area for each of the one or more first fluids; the fluid dispense system being **characterized in that** the processor is further configured for calculating the number of droplets for each pixel for each of the one or more first fluids by:

a1) calculating an area of the specified area;
a2) determining a number of pixels of the specified area based on the calculated area and the resolution of the data;
a3) calculating the number of droplets for each pixel of the specified area for each of the one or more first fluids based on the number of pixels of the specified area, the droplet volume and the volume per unit area for each of the one or more first fluids.

9. The fluid dispense system of claim 8, wherein the resolution of the data is greater than the spatial resolution of the digital dispense device.

10. The fluid dispense system of claim 8, wherein the resolution of the data is less than or equal to the spatial resolution of the digital dispense device.

11. The fluid dispense system of claim 8, further comprising (F) a separator which comprises a wait period of time between fluid depositions of each of the one or more first fluids deposited by the fluid cartridge (15).

12. The fluid dispense system of claim 8, further comprising (F) separator which comprises a time period to dry the dispensed fluids, mix dispensed fluids, or complete a chemical reaction of the dispensed fluids between fluid depositions.

13. The fluid dispense system of claim 8, further comprising a second fluid cartridge containing fluid ejectors for ejecting one or more second fluids from the digital dispense device (14).

14. The fluid dispense system of claim 13, further comprising (F) separator between the one or more first fluids and the one or more second fluids, wherein the separator comprises a time period for a cartridge change from the first fluid cartridge to the second fluid cartridge.

**Patentansprüche**

1. Verfahren zum Ausstoßen eines Volumens pro Flächeneinheit für jedes von einem oder mehreren Fluiden aus einer digitalen Abgabevorrichtung (14), umfassend eine Kartusche (15), die durch eine Translationsvorrichtung (17) über eine Schale (30) bewegt werden kann, wobei die Kartusche (15) einen Ausstoßkopf zum Ablagern des einen oder der mehreren Fluide in oder auf ein von der Schale (30) gehaltenes Substrat umfasst, wobei der Abgabekopf mehrere Fluidausstoßer entlang einer Abgabekopfanordnung zum Abgeben von Fluidtröpfchen umfasst, wobei das Verfahren die folgenden Schritte umfasst:

a) Eingeben, in einen Speicher, auf der Grundlage eines Volumens pro Flächeneinheit für jedes der einen oder mehreren Fluide, die von der digitalen Abgabevorrichtung (14) ausgestoßen werden sollen, von Daten für jedes der einen oder mehreren Fluide, wobei die Daten Header-Informationen umfassen und eine Anordnung von Pixeln auf einer spezifizierten Fläche des Substrats definieren, sowie eine Anzahl von Tröpfchen für jedes Pixel für jedes der einen oder mehreren Fluide, wobei die Header-Informationen ein Tröpfchenvolumen umfassen und ferner eine horizontale Pixelauflösung und eine vertikale Pixelauflösung umfassen, die eine Auflösung der Daten darstellen; und wobei die Auflösung der Daten nicht spezifisch für die digitale Abgabevorrichtung (14) ist;
b) Verarbeiten der Daten, um die Auflösung der Daten und eine räumliche Auflösung der digitalen Abgabevorrichtung (14) durch Aufwärts- oder Abwärtsabtastung der Auflösung der Daten anzugleichen, um eine Anzahl von Tröpfchen zu berechnen, die für jedes der einen oder mehreren Fluide zu jedem Pixel in Übereinstimmung mit der räumlichen Auflösung der digitalen Abgabevorrichtung (14) ausgestoßen werden sollen;
c) Spezifizieren einer Mindestanzahl von Fluidausstoßern unter den mehreren Fluidsausstoßern für die Anzahl von Tröpfchen, die zu jedem Pixel ausgestoßen werden sollen; und
d) Ausstoßen von Fluid aus der digitalen Abgabevorrichtung (14), um das Volumen pro Fläche für jedes der einen oder mehreren Fluide bereitzustellen,

wobei das Verfahren **dadurch gekennzeichnet ist, dass** der Schritt a) das Berechnen der Anzahl von Tröpfchen für jedes Pixel für jede der einen oder mehreren Fluiden umfasst durch:

a1) Berechnen einer Fläche der spezifizierten Fläche;
a2) Bestimmen einer Anzahl von Pixeln der spezifizierten Fläche basierend auf der berechneten Fläche und der Auflösung der Daten;
a3) Berechnen der Anzahl der Tröpfchen für jedes Pixel der spezifizierten Fläche für jedes der einen oder mehreren Fluide auf der Grundlage der Anzahl der Pixel der spezifizierten Fläche, des Tröpfchenvolumens und des Volumens pro Flächeneinheit für jedes der einen oder mehreren Fluide.

2. Verfahren gemäß Anspruch 1, wobei die Auflösung der Daten größer ist als die räumliche Auflösung der digitalen Abgabevorrichtung (14).

3. Verfahren gemäß Anspruch 1, bei dem die Auflösung der Daten kleiner oder gleich der räumlichen Auflösung der digitalen Abgabevorrichtung (14) ist.

4. Verfahren gemäß Anspruch 1, ferner umfassend: (e) Eingeben eines Separators, der eine Wartezeit zwischen Fluidabgaben nach Schritt (d) und Wiederholen der Schritte (a) - (d) umfasst.

5. Verfahren gemäß Anspruch 4, ferner umfassend: (e) Eingeben eines Separators, der eine Zeitspanne für einen Fluidkartuschenwechsel zwischen Fluidablagerungen nach Schritt (d) und Wiederholen der Schritte (a) - (d) umfasst.

6. Verfahren gemäß Anspruch 1, ferner umfassend: (e) Eingeben eines Separators, der eine Zeitspanne zum Trocknen der abgegebenen Fluide, zum Mischen der abgegebenen Fluide oder zum Abschließen einer chemischen Reaktion der abgegebenen Fluide zwischen den Fluidabgaben nach Schritt (d) und dem Wiederholen der Schritte (a) - (d) umfasst.

7. Verfahren gemäß Anspruch 4, ferner umfassend Wiederholen von Schritt (e) für jedes der einen oder mehreren Fluide bis zu und einschließlich vierzig verschiedener Fluide.

8. Fluidabgabesystem, umfassend:

eine digitale Abgabevorrichtung (14) zum Ausstoßen eines Volumens pro Flächeneinheit für jedes von einem oder mehreren ersten Fluiden, wobei die digitale Abgabevorrichtung (14) eine Kartusche (15) umfasst, die durch eine Translationsvorrichtung (17) über eine Schale (30) bewegbar ist, wobei die Kartusche (15) einen Ausstoßkopf zum Ablagern des einen oder der mehreren ersten Fluide in oder auf ein von der Schale (30) gehaltenes Substrat umfasst, wobei der Ausstoßkopf mehrere Fluidausstoßer entlang einer Ausstoßkopfanordnung zur Abgabe von Fluidtröpfchen umfasst;

einen Computer, der einen Prozessor, einen Speicher und einen Eingang umfasst, der so konfiguriert ist, dass er auf der Grundlage des Volumens pro Flächeneinheit für jedes der einen oder mehreren ersten Fluide, die von der digitalen Abgabevorrichtung (14) ausgestoßen werden sollen, Daten für jedes der einen oder mehreren ersten Fluide in den Speicher eingibt, wobei die Daten Header-Informationen umfassen und eine Anordnung von Pixeln auf einer spezifischen Fläche des Substrats definieren, und eine Anzahl von Tröpfchen für jedes Pixel für jede der einen oder mehreren ersten Fluiden, wobei die Header-Informationen ein Tröpfchenvolumen umfassen und ferner eine horizontale Pixelauflösung und eine vertikale Pixelauflösung umfassen, die eine Auflösung der Daten darstellen, und wobei die Auflösung der Daten nicht spezifisch für die digitale Abgabevorrichtung (14) ist, und

wobei der Prozessor so konfiguriert ist, dass er die Daten so verarbeitet, dass sie mit der Auflösung der Daten und einer räumlichen Auflösung der digitalen Abgabevorrichtung (14) übereinstimmen, durch Aufwärts- oder Abwärtsabtastung der Auflösung der Daten, um eine Anzahl von Tröpfchen zu berechnen, die für jedes der einen oder mehreren ersten Fluide in jedes Pixel in Übereinstimmung mit der räumlichen Auflösung der digitalen Abgabevorrichtung (14) ausgestoßen werden sollen, und

wobei der Prozessor ferner so konfiguriert ist, dass er eine minimale Anzahl von Fluidsausstoßern unter den mehreren Fluidsausstoßern für die Anzahl von Tröpfchen, die zu jedem Pixel ausgestoßen werden sollen, spezifiziert; und

eine erste Fluidkartusche (15), die Fluidejektoren zum Ausstoßen eines oder mehrerer erster Fluide aus der digitalen Abgabevorrichtung (14) enthält, um das Volumen pro Fläche für jedes der einen oder mehreren ersten Fluide bereitzustellen; wobei das Fluidabgabesystem **dadurch gekennzeichnet ist, dass** der Prozessor ferner zum Berechnen der Anzahl von Tröpfchen für jedes Pixel für jedes der einen oder mehreren ersten Fluide konfiguriert ist durch:

a1) Berechnen einer Fläche der spezifizierten Fläche;

a2) Bestimmen einer Anzahl von Pixeln der spezifizierten Fläche basierend auf der berechneten Fläche und der Auflösung der Daten;

a3) Berechnen der Anzahl der Tröpfchen für jedes Pixel der spezifizierten Fläche für jede der einen oder mehreren ersten Fluiden auf der Grundlage der Anzahl der Pixel der spezifizierten Fläche, des Tröpfchenvolumens und des Volumens pro Flächeneinheit für jede der einen oder mehreren ersten Fluiden.

9. Fluidabgabesystem gemäß Anspruch 8, wobei die Auflösung der Daten größer ist als die räumliche Auflösung der digitalen Abgabevorrichtung.

10. Fluidabgabesystem gemäß Anspruch 8, wobei die Auflösung der Daten kleiner oder gleich der räumlichen Auflösung der digitalen Abgabevorrichtung ist.

11. Fluidabgabesystem gemäß Anspruch 8, ferner umfassend: (F) einen Separator, der eine Wartezeit zwischen den Fluidabgaben jedes der einen oder mehreren ersten Fluide umfasst, die von der Fluidkartusche (15) abgegeben werden.

12. Fluidabgabesystem gemäß Anspruch 8, ferner umfassend: (F) einen Separator, der eine Zeitspanne zum Trocknen der abgegebenen Fluide, zum Mischen der abgegebenen Fluide oder zum Abschließen einer chemischen Reaktion der abgegebenen Fluide zwischen Fluidabgaben umfasst.

13. Fluidabgabesystem gemäß Anspruch 8, ferner umfassend eine zweite Fluidkartusche mit Fluidausstoßern zum Ausstoßen eines oder mehrerer zweiter Fluide aus der digitalen Abgabevorrichtung (14).

14. Fluidabgabesystem gemäß Anspruch 13, ferner umfassend: (F) einen Separator, zwischen dem einen oder den mehreren ersten Fluiden und dem einen oder den mehreren zweiten Fluiden umfasst, wobei der Separator eine Zeitspanne für einen Kartuschenwechsel von der ersten Fluidkartusche zur zweiten Fluidkartusche umfasst.

**Revendications**

1. Un procédé pour éjecter un volume par unité de surface pour chacun d'un ou plusieurs fluides à partir d'un dispositif de distribution numérique (14) comprenant une cartouche (15) qui est mobile par un dispositif de translation (17) à travers un plateau (30), la cartouche (15) comprenant une tête d'éjection pour déposer le ou les fluides dans ou sur un substrat maintenu par le plateau (30), la tête de distribution comprenant une pluralité d'éjecteurs de fluide le long d'un réseau de têtes de distribution pour distribuer des gouttelettes de fluide, le procédé comprenant les étapes consistant à :

   a) entrer dans une mémoire, sur la base d'un volume par unité de surface pour chacun du ou des fluides à éjecter du dispositif de distribution numérique (14), des données pour chacun du ou des fluides, les données comprenant des informations d'entête et définissant un réseau de pixels sur une zone spécifiée du substrat, et un nombre de gouttelettes pour chaque pixel pour chacun du ou des fluides, les informations d'entête comprenant un volume de gouttelettes et comprenant en outre une résolution horizontale en pixels et une résolution verticale en pixels qui représente une résolution des données ; et la résolution des données n'étant pas spécifique au dispositif de distribution numérique (14) ;
   b) traiter les données de façon à faire correspondre la résolution des données et une résolution spatiale du dispositif de distribution numérique (14) par suréchantillonnage ou sous-échantillonnage de la résolution des données pour calculer un nombre de gouttelettes à éjecter pour chacun du ou des fluides à chaque pixel conformément à la résolution spatiale du dispositif de distribution numérique (14) ;
   c) spécifier un nombre minimum d'éjecteurs de fluide parmi la pluralité d'éjecteurs de fluide pour le nombre de gouttelettes à éjecter vers chaque pixel ; et
   d) éjecter le fluide du dispositif de distribution numérique (14) pour fournir le volume par zone pour chacun du ou des fluides,

   le procédé étant **caractérisé en ce que** l'étape a) comprend le fait de calculer le nombre de gouttelettes pour chaque pixel pour chacun du ou des fluides par :

   a1) le fait de calculer une surface de la zone spécifiée ;
   a2) le fait de déterminer un nombre de pixels de la zone spécifiée sur la base de la surface calculée et de la résolution des données ;
   a3) le fait de calculer le nombre de gouttelettes pour chaque pixel de la zone spécifiée pour chacun du ou des fluides sur la base du nombre de pixels de la zone spécifiée, du volume des gouttelettes et du volume par unité de surface pour chacun du ou des fluides.

2. Le procédé selon la revendication 1, dans lequel la résolution des données est supérieure à la résolution spatiale du dispositif de distribution numérique (14).

3. Le procédé selon la revendication 1, dans lequel la résolution des données est inférieure ou égale à la résolution spatiale du dispositif numérique de distribution (14).

4. Le procédé selon la revendication 1, comprenant en outre (e) le fait d'entrer un séparateur qui comprend une période d'attente entre les dépôts de fluide après l'étape (d) et le fait de répéter les étapes (a) à (d).

5. Le procédé selon la revendication 4, comprenant en outre (e) le fait d'entrer un séparateur qui comprend une période de temps pour un changement de cartouche de fluide entre des dépôts de fluide après l'étape (d) et le fait de répéter les étapes (a) à (d).

6. Le procédé selon la revendication 1, comprenant en outre (e) le fait d'entrer un séparateur qui comprend une période de temps pour sécher les fluides distribués, mélanger les fluides distribués ou terminer une réaction chimique des fluides distribués entre les dépôts de fluide après l'étape (d) et le fait de répéter les étapes (a) à (d).

7. Le procédé selon la revendication 4, comprenant en outre le fait de répéter l'étape (e) pour chacun du ou des fluides jusqu'à, et y compris, quarante fluides différents.

8. Un système de distribution de fluide comprenant :

   un dispositif de distribution numérique (14) pour éjecter un volume par unité de surface pour chacun d'un ou plusieurs premiers fluides, le dispositif de distribution numérique (14) comprenant une cartouche (15) qui est mobile par un dispositif de translation (17) à travers un plateau (30), la cartouche (15) comprenant une tête d'éjection pour déposer le ou les premiers fluides dans ou sur un substrat maintenu par le plateau (30), la tête de distribution comprenant une pluralité d'éjecteurs de fluide le long d'un réseau de têtes de distribution pour distribuer des gouttelettes de fluide ;

un ordinateur comprenant un processeur, une mémoire et une entrée configurée pour entrer dans la mémoire, sur la base du volume par unité de surface pour chacun du ou des premiers fluides à éjecter du dispositif de distribution numérique (14), des données pour chacun du ou des premiers fluides, les données comprenant des informations d'en-tête et définissant un réseau de pixels sur une zone spécifiée du substrat, et un nombre de gouttelettes pour chaque pixel pour chacun du ou des premiers fluides, les informations d'en-tête comprenant un volume de gouttelettes et comprenant en outre une résolution en pixels horizontale et une résolution en pixels verticale qui représentent une résolution des données, et la résolution des données n'étant pas spécifique au dispositif de distribution numérique (14), et

le processeur étant configuré pour traiter les données de façon à faire correspondre la résolution des données et une résolution spatiale du dispositif de distribution numérique (14) en suréchantillonnant ou en sous-échantillonnant la résolution des données pour calculer un nombre de gouttelettes à éjecter pour chacune des un ou plusieurs premiers fluides à chaque pixel conformément à la résolution spatiale du dispositif de distribution numérique (14), et

le processeur est en outre configuré pour spécifier un nombre minimum d'éjecteurs de fluide parmi les la pluralité d'éjecteurs de fluide pour le nombre de gouttelettes à éjecté sur chaque pixel ; et

une première cartouche de fluide (15) contenant des éjecteurs de fluide pour éjecter un ou plusieurs premiers fluides du dispositif de distribution numérique (14) pour fournir le volume par zone pour chacun du ou des premiers fluides ; le système de distribution de fluide étant **caractérisé en ce que** le processeur est en outre configuré pour calculer le nombre de gouttelettes pour chaque pixel pour chacun du ou des premiers fluides par :

a1) le fait de calculer une surface de la zone spécifiée ;
a2) le fait de déterminer un nombre de pixels de la zone spécifiée sur la base de la surface calculée et de la résolution des données ;
a3) le fait de calculer le nombre de gouttelettes pour chaque pixel de la zone spécifiée pour chacun du ou des premiers fluides sur la base du nombre de pixels de la zone spécifiée, du volume des gouttelettes et du volume par unité de surface pour chacun du ou des plusieurs premiers fluides.

9. Le système de distribution de fluide selon la revendication 8, dans lequel la résolution des données est supérieure à la résolution spatiale du dispositif de distribution numérique.

10. Le système de distribution de fluide selon la revendication 8, dans lequel la résolution des données est inférieure ou égale à la résolution spatiale du dispositif de distribution numérique.

11. Le système de distribution de fluide selon la revendication 8, comprenant en outre (F) un séparateur qui comprend une période d'attente entre des dépôts de fluide de chacun du ou des premiers fluides déposés par la cartouche de fluide (15).

12. Le système de distribution de fluide selon la revendication 8, comprenant en outre (F) un séparateur qui comprend une période de temps pour sécher les fluides distribués, mélanger les fluides distribués ou terminer une réaction chimique des fluides distribués entre des dépôts de fluide.

13. Le système de distribution de fluide selon la revendication 8, comprenant en outre une deuxième cartouche de fluide contenant des éjecteurs de fluide pour éjecter un ou plusieurs deuxièmes fluides du dispositif de distribution numérique (14).

14. Le système de distribution de fluide selon la revendication 13, comprenant en outre (F) un séparateur entre le ou les premiers fluides et le ou les deuxièmes fluides, le séparateur comprenant une période de temps pour un changement de cartouche de la première cartouche de fluide à la deuxième cartouche de fluide.

**FIG. 1**

**FIG. 2**

**FIG. 3**

22 →    24    26

| 0 | 0 | 0 | 0 | 0 | 0 | 0 | 0 | 0 |
|---|---|---|---|---|---|---|---|---|
| 0 | 0 | 0 | 0 | 55 | 0 | 0 | 0 | 0 |
| 0 | 0 | 0 | 55 | 55 | 55 | 0 | 0 | 0 |
| 0 | 0 | 55 | 55 | 55 | 55 | 55 | 0 | 0 |
| 0 | 0 | 55 | 55 | 55 | 55 | 55 | 0 | 0 |
| 0 | 0 | 0 | 55 | 55 | 55 | 0 | 0 | 0 |
| 0 | 0 | 0 | 0 | 55 | 0 | 0 | 0 | 0 |
| 0 | 0 | 0 | 0 | 0 | 0 | 0 | 0 | 0 |

## FIG. 4

22 →    24    26

| 0 | 0 | 0 | 0 | 0 | 0 | 0 | 0 | 0 |
|---|---|---|---|---|---|---|---|---|
| 0 | 0 | 0 | 0 | 56 | 0 | 0 | 0 | 0 |
| 0 | 0 | 0 | 56 | 55 | 56 | 0 | 0 | 0 |
| 0 | 0 | 56 | 55 | 56 | 55 | 56 | 0 | 0 |
| 0 | 0 | 55 | 56 | 55 | 56 | 55 | 0 | 0 |
| 0 | 0 | 0 | 55 | 56 | 55 | 0 | 0 | 0 |
| 0 | 0 | 0 | 0 | 56 | 0 | 0 | 0 | 0 |
| 0 | 0 | 0 | 0 | 0 | 0 | 0 | 0 | 0 |

## FIG. 5

**FIG. 6**

| IDENTIFY AREAS OF JOB THAT HAVE VOLUME AND DETERMINE VOLUMES FOR EACH CHANNEL | CALCULATE AREA TO DETERMINE PIXEL COUNT | DETERMINE THE VALUE OF EACH PIXEL IN THE DATA |
|---|---|---|
| SHAPES MAY BE STANDARDS SUCH AS SQUARES AND CIRCLES OR MORE COMPLEX SHAPES | METHOD IS BASED ON SHAPE | |
| | COULD BE ESTIMATION FOR VERY COMPLEX SHAPES | |

**FIG. 7**

50

**FIG. 8**

**FIG. 9**

60

NEW FLUID DISPENSE TASK — 62

DISPENSE ONE OR MORE FLUIDS ONTO A SUBSTRATE — 64

66

LAYER SEPARATOR

HARDWARE INPUT

68

USER INTERFACE

70

FLUID DISPENSE TASK COMPLETE?

NO

72

YES

FINALIZED FLUID DISPENSE TASK — 74

**FIG. 10**

80

600x600

20

==

82

600x1200

10

10

==

84

1200x1200

5   5

5   5

**FIG. 11**

**FIG. 12**

**FIG. 13**

**FIG. 14**

124

122    120

**FIG. 15**

126

122    120

**FIG. 16**

**FIG. 17**

**EP 3 677 920 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62788290
- US 16426137 B
- EP 1093923 A1